# EUROPEAN PATENT APPLICATION

(11) **EP 1 657 967 A1**
(43) Date of publication of application: **17.05.2006**
(21) Application number: 04078114.8
(22) Date of filing: 12.11.2004
(51) Int. Cl.: H05B 37/03, H05B 37/02

(54) **A filter with a fuse, for use in a lamppost**

(71) Applicant: Koninklijke KPN N.V., 2516 CK The Hague (NL)
(72) Inventor: Van Deventer, Mattijs Oskar, 2264 DL Leidschendam (NL); Floor, Richard Jacobus Joannes, 1948 AC Beverwijk (NL)
(74) Representative: Wuyts, Koenraad Maria

(57) **Abstract**

It is disclosed that a lamppost (2) can comprise a low pass filter (17) for preventing the creation of undesirable electromagnetic fields. The low pass filter passes a first signal (11) and prevents a second signal (12) to enter further into the lamppost (2). The first signal (11) can be a power signal that is transported via a powerline (10) to lampposts (1,2). The second signal (12) can be a telecommunication signal that is transported via the powerline (10) to or from telecommunication equipment (7) that is present in one or more lampposts (1). The low pass filter (17) can be comprised by a second fuse (8'). There also can be a switch (18) comprised by the second fuse (8') via which switch it is possible to activate and deactivate the low pass filter (17).

## Description

### FIELD OF THE INVENTION

The present invention relates to a lamppost, a fuse and the usage of a fuse in relation to public facilities that are situated at a location where electric power lines are used to transport a telecommunication signal.

### BACKGROUND OF THE INVENTION

There are developments in relation to the usage of public facilities such as lampposts for containing active and passive telecommunication equipment. The active and passive telecommunication equipment is part of a telecommunication (access) infrastructure such as a fixed or a mobile network. If the public facility is a lamppost, it is possible to house the telecommunication equipment because lampposts are hollow, and because electrical power can be made available in a lamppost Also other types of public facilities and installations, such as traffic lights, can be used in a way described in this disclosure. An advantage of this approach is that existent space is used. and that it is not necessary to create new space. Also no digging activities (for instance on the streets) and installation of new cabinets and the like is not necessary, then.

An advantage of the usage of public facilities is that power supply already is present in behalf of the lighting facilities in the lamppost. This power supply can be used also to feed the active telecommunication equipment that is placed inside the lamppost. Some additional facilities could however be needed, for instance facilities for enabling the supply of power to the telecommunication equipment during daytime when the lighting facilities in the lamppost are switched off.

The transportation of a telecommunication signal over a power-line is a known concept. The bandwidth (KHz-MHz-GHz) of the telecommunication signal (second signal) often differs considerably from the bandwidth (1 -100 Hz) of the power signal (first signal).

The concept of using a lamppost for the housing of telecommunication equipment can be applied in such a way that in a certain area some lampposts contain telecommunication equipment while other lampposts do not contain telecommunication equipment. In other words, there can be two types of lampposts, lampposts containing telecommunication equipment and lampposts without telecommunication equipment. The second signal can only be relevant to the lampposts that do contain telecommunication equipment, while the first signal is relevant for both types of lampposts.

A problem can occur because the lampposts are connected to each other by the power supply facility. The second signal will not only enter the lampposts that contain telecommunication equipment but also the lampposts without telecommunication equipment. When the second signal enters a lamppost without telecommunication equipment all kinds of electromagnetic effects may occur as a result of this. For instance, an electromagnetic field may be generated by a lamppost because the lamppost behaves as an antenna when receiving the second signal. The undesirable effects can be significant since in general there can be many lampposts without telecommunication equipment, while the number of lampposts that do contain telecommunication equipment can be low. Generated fields such as electromagnetic fields can interfere with second signals that are transported to or from telecommunication equipment in the other lampposts. As a consequence the quality provided by the telecommunication infrastructure to which the telecommunication equipment in the lampposts belong will be low.

### AIM OF THE INVENTION

It is an object of the invention to eliminate the drawbacks of the prior art and to provide an efficient concept for avoiding a second signal to enter a lamppost that does not contain telecommunication equipment.

### SUMMARY OF THE INVENTION

In accordance with this invention, a lamppost, a fuse and the usage of a fuse are disclosed in relation to public facilities that are situated at a location where electric power lines are used to transport a telecommunication signal. The lamppost according to the present invention comprises:
a lighting facility and a cable section via which the lighting facility is fed by a first signal, the lamppost suitable for being connected to a power-line via which the first signal and a second signal are provided to the lamppost, whereby the lamppost comprises a low pass filter for preventing the lighting facility to be fed by the second signal via cable section.

In a first aspect of the invention is disclosed that a lamppost can comprise a low pass filter. In general, lampposts are connected to a powerline via which electrical power is supplied to lighting facilities in the lampposts. It is possible to use this powerline also for the transportation of telecommunication signals. In this situation, there are two signal transported via the powerline; a first signal for feeding the lighting facilities in the lampposts and a second signal which is the telecommunication signal. Theneed for transporting a telecommunication signal in relation to lampposts can be existent if telecommunication equipment is present in one or more lampposts. The usage of the powerline for the transportation of telecommunication signals can be efficient because existent infrastructure is used. The low pass filter comprised by the lamppost prevents high frequency signals to pass through. Since the second signal is of a higher frequency then the first signal, the second signal will not pass the low pass filter. Dependent on the location of the low pass filter in the lamppost, the second signal will not enter further into the lamppost. The cable section between the low pass filter and the lighting facility will only transport the first signal and not the second signal. As a result, there will be advantageously no electromagnetic field because the second signal is not being transported over this cable section. If there is a first fuse in the lamppost, the low pass filter can be in series with this first fuse.

In another aspect of the invention the low pass filter can be comprised by a second fuse. An advantage of this is that a first fuse without a low pass filter can be replaced easily by a second fuse comprising a low pass filter. In general, fuses in lampposts are accessible via a fuse box hatch. The replacement of the first fuse can easily take place via this fuse box hatch. Replacement of the first fuse can be needed if the powerline is started being used for the transport of both the first signal and the second signal, after it was first being used for the transportation of the first signal only.

There may also be a switch comprised by the second fuse. With this switch it is possible to activate and deactivate the low pass filter that is comprised by the second fuse. This offers the possibility to use a second fuse comprising a low pass filter even when the powerline is not used for the transportation of the second signal. The low pass filter will then be switched off. When, at a later instance, the powerine is used for transporting both the first signal and the second signal, then the low pass filter can be switched on.

### BRIEF DESCRIPTION OF THE DRAWING FIGURE

The foregoing aspects and many of the attendant advantages of this invention will become better understood by reference to the following detailed description, when taken in conjunction with the accompanying drawing, wherein:
FIG. 1 is a block diagram illustrating the concept of using lampposts (1, 2) for containing active and passive network elements of a telecommunication infrastructure.
FIG. 2 shows a regular lamppost (2) that is not configured to contain telecommunication equipment in more detail.
In FIG. 3 a second fuse (8') is depicted that is adapted in such a way that it is suitable to avoid a second signal (12) to enter further into the lamppost (2).

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

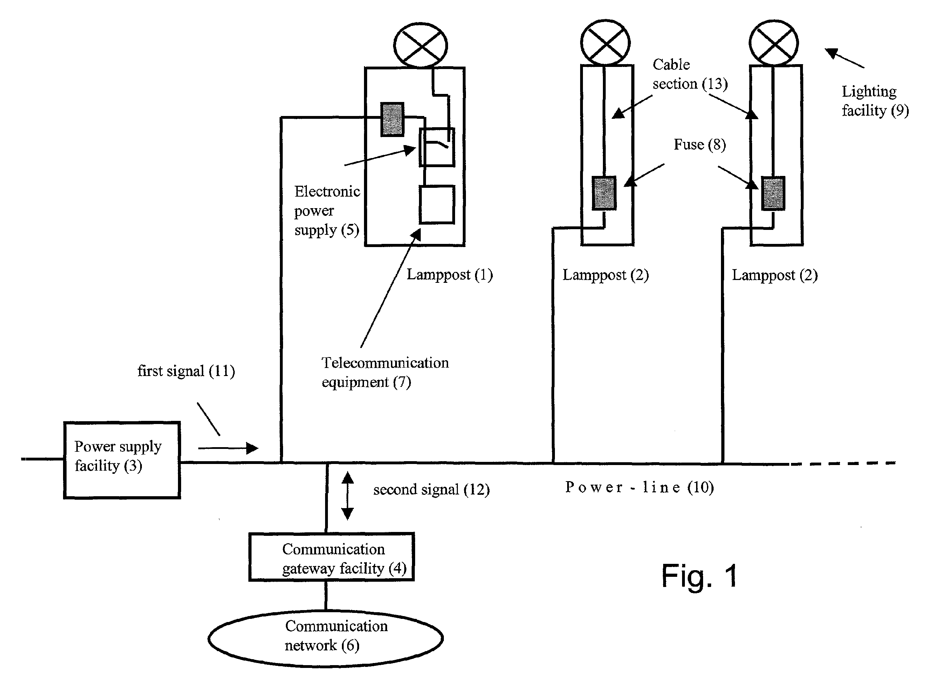

FIG.1 shows a conceptual picture of a configuration in which a lampposts (1) of type 1 contains telecommunication equipment (7) and other lampposts (2) of type 2 do not contain telecommunication equipment (7). The telecommunication equipment (7) is connected to a communication network (6) via a communication gateway facility (4). The telecommunication equipment (7) can for instance be equipment for mobile communications purposes. In such a case, users can for instance use their mobile devices when they are in the surroundings of the lamppost (1). The telecommunication equipment (7) is not limited to a specific type of equipment, but can be any type of equipment that is comprised by a communication infrastructure. A power-line (10) provides the lamppost (1) and the lamppost (2) with electrical power for a lighting facility (9) which is present in the lamppost (1) and (2). For this purpose a first signal (11) is transported over the power-line (10). The first signal (11) originates from a power supply (3). The power supply (3) can for instance be a power cabinet that is located in or near a street where the lampposts (1,2) are located. The first signal (11) can be a power voltage signal of a relatively low frequency for instance in the bandwidth up to 1 kHz. There is also a second signal (12) that originates from or is transported to the communication network (6). The second signal (12) can be transported over the power-line (10) to the telecommunication equipment (7). The second signal (12) can be any type of telecommunication or data communication signal for instance relating to IP traffic and ATM traffic (signaling signals are not excluded). There are no limitations regarding the nature or the characteristics of the second signal (12). In general the first signal (11) is of a higher voltage then the second signal (12). In other words, the voltage of the first signal (11) should be above a certain level in order to activate the lighting facility (9). The communication gateway facility (4) enables the communication network (6) to be connected to the power-line (10). A communication gateway facility (4) can be needed because the communication network (6) does generally not comprise facilities that enable the transport of a telecommunication or data communication signal over high voltage lines. The second signal (12) can be unidirectional or bi-directional.

A lamppost (2) of type 2 does not comprise the telecommunication equipment (7) and is used in a regular way, i.e. for lighting purposes. In or near the lamppost is a first fuse (8) located for preventing short-circuiting to occur. The first fuse (8) is constructed in such a way that it disconnects the lighting facility (9) when current above a certain amperage level is provided to the lamppost (2). For this purpose, a safety wire may be comprised by the first fuse (8). However, in normal operation the first fuse (8) will pass both the second signal (12) and the first signal (11). Both signals are transported via a cable section (13) between the location of the first fuse (8) and the location of the lighting facility (9), although it is only desirable that the first signal (11) is transported over that cable section (13). The second signal (12) over cable section (13) can generate electromagnetic fields that decrease the performance of operation of the telecommunication equipment (7). For instance, a wired signal (second signal (12)) or wireless signal that is sent using telecommunication equipment (7) from a nearby lamppost (1) can be interfered with as a result of the electromagnetic field. The generated electromagnetic field may also cause malfunctioning of the telecommunication equipment (7). Furthermore, the generated electromagnetic field may interfere with another signal that is sent to the lamppost (1). This other signal can be a wired signal (second signal (12)) or a wireless signal. The generated electromagnetic field may also interfere with other types of signals, for instance the signal between the end-user device of a mobile user and a base station. This interference may for instance occur when the mobile user is located near a lamppost (2) while there is a mobile call active.

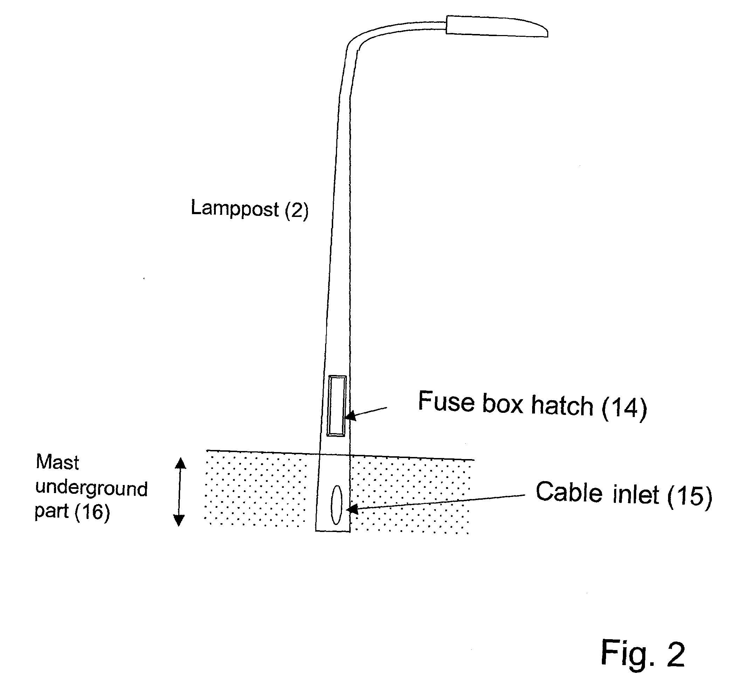

FIG. 2 shows a picture of a lamppost (2). Dependent on the physical characteristics of the lamppost (2) such as the height and the material that has been used, the problems mentioned before may occur in a more or lesser degree. For instance, if the lamppost (2) is constructed mainly of metals the intensity of the electromagnetic field outside the lamppost (2) as a result of the transportation of the second signal (12) over cable section (13) may be less than in the case that the lamppost (2) is mainly constructed of synthetic materials. Often there is a fuse box hatch (14) via which the first fuse (8) is accessible. Via a cable inlet (15) the power-line (10) enters lamppost (2). Further, there is a mast underground part (16) that is a part of the lamppost (2).

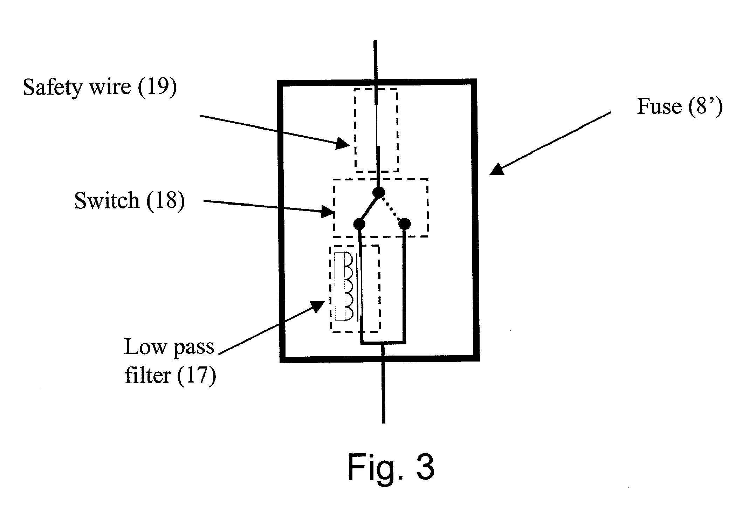

FIG. 3 shows a second fuse (8') that contains a low pass filter (17) and a safety wire (19). The safety wire (19) melts if the electrical current flowing through it is above a certain level of amperage. The low pass filter (17) filters out high frequency signals but will pass low frequency signals. As a result the first signal (11) is passed trough the second fuse (8'), but the second signal (12) will not be able to reach the cable section (13). The techniques to create a low pass filter (17) are known techniques. An advantage of the usage of second fuse (8') is that a first fuse (8) simply can be replaced by the second fuse (8') in order to achieve that the second signal (12) does not reach the cable section (13) and thus to achieve the advantage that the undesirable electromagnetic effects do not occur anymore. In an embodiment of this invention (which is depicted in FIG. 3) the second fuse (8') may be constructed in such a way that the low pass filter (17) can be switched on and switched off via a switch (18). An advantage of this embodiment is that the second fuse (8') can be installed in the lamppost (2) while the low pass filter is switched on. If the lamppost is used at a later instance for containing telecommunication equipment (7) it is not needed to install another type of fuse, and it is sufficient to switch off the low pass filter of the second fuse (8'). However, it may also be possible that the switch (18) is not present. Furthermore, the low pass filter (17) can also be positioned outside the fuse (8). In this case instead of the second fuse (8') a first fuse (8) is used that is in series with the low pass filter (17). The first fuse (8) and the low pass filter (17) can be accessible via fuse box hatch (14).

## Claims

1. A lamppost (2) comprising a lighting facility (9) and a cable section (13) via which the lighting facility (9) is fed by a first signal (11), the lamppost (2) suitable for being connected to a power-line (10) via which the first signal (11) and a second signal (12) are provided to the lamppost (2), whereby the lamppost (2) comprises a low pass filter (17) for preventing the lighting facility (9) to be fed by the second signal (12) via cable section (13).

2. Lamppost (2) according to claim 1, whereby the lamppost (2) comprises a first fuse (8) that is in series with the low pass filter (17).

3. Lamppost (2) according to claim 1, whereby the low pass filter (17) is comprised by a second fuse (8'), the second fuse (8') comprising a safety wire (19).

4. Lamppost (2) according to claim 3, whereby the second fuse (8') comprises a switch (18) for activating and deactivating the low pass filter (17).

5. Lamppost (2) according to any of the preceding claims, whereby the second signal (12) is a telecommunication signal.

6. A second fuse (8') suitable for being used in a lamppost (2), the second fuse (8') comprising a low pass filter (17).

7. A second fuse (8') according to claim 6, whereby the second fuse (8') comprises a switch (18) for activating and deactivating the low pass filter (17).

8. Usage of a low pass filter (17) in a lamppost (2).
